# EUROPÄISCHE PATENTSCHRIFT

(11) **EP 1 445 552 B1**
(45) Veröffentlichungstag und Bekanntmachung des Hinweises auf die Patenterteilung: **16.11.2011**
(21) Anmeldenummer: 04002701.3
(22) Anmeldetag: 06.02.2004
(51) Int. Cl.: F24H 1/26, F24H 3/06

(54) **Fahrzeugheizeinrichtung**
Car heating assembly
Installation de chauffage de voitures

(30) Priorität: 10.02.2003 DE 10305383
(43) Veröffentlichungstag der Anmeldung: 11.08.2004
(73) Patentinhaber: J. Eberspächer GmbH & Co. KG, 73730 Esslingen (DE)
(72) Erfinder: Hilber, Jacob, 71229 Leonberg (DE); Hohmann, Harry, 73249 Wernau (DE)
(74) Vertreter: Ruttensperger, Bernhard

(56) Entgegenhaltungen:
- GB-A- 2 174 790
- US-A- 4 395 225

## Beschreibung

Die vorliegende Erfindung betrifft eine einen Heizbrenner und eine damit verbundene Wärmetauscheranordnung, diese umfassend Fahrzeugheizeinrichung, umfassend ein topfartiges äußeres Gehäuse mit einer in Richtung einer Gehäuselängsachse sich erstreckenden Umfangswandung und einer Bodenwandung und ein topfartiges inneres Gehäuse mit einer in Richtung der Gehäuselängsachse sich erstreckenden Umfangswandung und einer Bodenwandung, wobei zwischen dem inneren Gehäuse und dem äußeren Gehäuse ein Strömungsraum für zu erwärmendes Fluid gebildet ist, gemäß dem Öberbegriff des Anspruchs 1.

Aus der DE 196 13 760 A1 ist ein Wärmetauscher für ein Fahrzeugheizgerät bekannt, bei welchem das innere Gehäuse mit einer Vielzahl von Rippen als Gussteil ausgebildet ist. Die Rippen erstrecken sich an der Innenseite dieses Gehäuses, also der einem Abgasströmungsraum zugewandten Seite in Richtung einer Gehäuselängsachse entlang der Umfangswandung. Eine entsprechende Formation ist an der Außenseite der Umfangswandung des inneren Gehäuses vorgesehen. Auf diese Art und Weise wird die Fläche zur Wärmeübertragung von den Verbrennungsabgasen auf das zu erwärmende Fluid vergrößert.

Eine Fahrzeugheizeinrichtung gemäß dem Oberbegriff des Anspruchs 1 ist aus der US-A-4395225 bekannt. Bei dieser bekannten Fahrzeugheizeinrichtung ist in dem zwischen dem äußeren Gehäuse und dem inneren Gehäuse gebildeten Strömungsraum für zu erwärmendes Fluid eine wendelartig ausgebildete Führungswandung vorgesehen, die, an die beiden Gehäuse anschließend, einen entsprechenden wendelartig ausgebildeten Strömungsweg für das zu erwärmende Fluid zwischen den beiden Gehäusen vorgibt.

Die GB-A-2174790 offenbart einen Wärmetauscher für eine Heizung, bei welchem ein Strömungsraum für zu erwärmende Flüssigkeit zwischen einem im Wesentlichen zylindrischen äußeren Gehäuse und einem balgenartig ausgebildeten inneren Gehäuse gebildet ist. Die balgenartige Struktur bildet in Längsrichtung aufeinander folgend Erhebungen und Einsenkungen an der Innenseite sowie der Außenseite des inneren Gehäuses, so dass jeweilige wendelartige Strömungswege für die in dem Strömungsraum zwischen den Gehäusen strömende Flüssigkeit und das an der Innenseite des inneren Gehäuses Wärme transportierende Abgas gebildet sind.

Es ist die Aufgabe der vorliegenden Erfindung, eine Fahrzeugheizeinrichtung bereitzustellen, welche eine weiter verbesserte Betriebscharakteristik aufweist.

Erfindungsgemäß wird diese Aufgabe gelöst durch eine Fahrzeugheizeinrichtung gemäß Anspruch 1. Diese umfasst eine Wärmetauscheneinrichtung, umfassend ein topfartiges äußeres Gehäuse mit einer in Richtung einer Gehäuselängsachse sich erstreckenden Umfangswandung und einer Bodenwandung und ein topfartiges inneres Gehäuse mit einer in Richtung der Gehäuselängsachse sich erstreckenden Umfangswandung und einer Bodenwandung, wobei zwischen dem inneren Gehäuse und dem äußeren Gehäuse ein Strömungsraum für zu erwärmendes Fluid gebildet ist wobei das innere Gehäuse im Bereich seiner Umfangswandung derart ausgebildet ist, dass an der dem Fluidströmungsraum zugewandten Außenseite der Umfangswandung und an der vom Fluidströmungsraum abgewandten und einem Verbrennungsabgasströmungsraum zugewandt zu positionierenden Innenseite der Umfangswandung eine bezüglich der Längsachse schraubenartig verlaufende Erhöhungs/Einsenkungs-Anordnung gebildet ist.

Bei der erfindungsgemäßen Fahrzeugheizeinrichtung ist ein Erhöhungs/Einsenkungs-Muster sowohl an der Innenseite als auch an der Außenseite der Umfangswandung des inneren Gehäuses gebildet, das durch seine bezüglich der Längsachse schraubenartig verlaufende Formgebung sowohl dem zu erwärmenden Fluid als auch den entlang der Innenseite der Umfangswandung des inneren Gehäuses strömenden Verbrennungsabgasen eine bestimmte Strömungsrichtung gibt. Durch die schraubenartige Erhöhungs/Einsenkungs-Anordnung strömen diese Medien ebenfalls in schraubenartiger Bewegungsrichtung entlang der Umfangswandung, und zwar an der Innenseite und an der Außenseite derselben, so dass die Wechselwirkungslänge, über welche die verschiedenen Medien die Umfangswandung des inneren Gehäuses umströmen, deutlich erhöht werden kann.

Um in einfacher Weise die erfindungsgemäße Strukturierung der Umfangswandung des inneren Gehäuses bereitstellen zu können, wird vorgeschlagen, dass das innere Gehäuse im Bereich seiner Umfangswandung zum Bereitstellen der Erhöhungs/Einsenkungs-Anordnung balgenartig ausgebildet ist.

Die Erhöhungs/Einsenkungs-Anordnung kann an der Außenseite und an der Innenseite der Umfangswandung des inneren Gehäuses eine gewindeartige Struktur bilden. Insbesondere kann bei der erfindungsgemäßen Wärmetauscheranordnung vorgesehen sein, dass dort, wo an der Außenseite der Umfangswandung des inneren Gehäuses eine Erhöhung gebildet ist, an der Innenseite eine Einsenkung gebildet ist und umgekehrt. Auf diese Art und Weise wird eine in radialer Richtung - bezogen auf die Gehäuselängsachsesehr flach bauende Anordnung mit maximaler Ausnutzung dieser radialen Höhe für Erhöhungen und Einsenkungen bereitgestellt.

Gemäß einem besonders bevorzugten Aspekt der Erfindung kann die Umfangswandung des inneren Gehäuses durch Umformen eines Blechrohlings gebildet sein. Dabei kann beispielsweise derartig vorgegangen werden, dass der Blechrohling auf einen Formkörper mit einer der Erhöhungs/Einsenkungs-AnordnungentsprechendenAußengewindestrukturierung"aufgeschraubt" wird und dabei ggf. auch unter Bereitstellung eines entsprechenden von der Außenseite her formenden Formkörpers in die gewünschte Form gebracht wird.

Um einen zu einer übermäßigen Abnutzung führenden Kontakt zwischen der Umfangswandung des inneren Gehäuses und der Umfangswandung des äußeren Gehäuses zu vermeiden, wird vorgeschlagen, dass die Umfangswandung des inneren Gehäuses im Bereich einer an der Außenseite derselben gebildeten Erhöhung einen Abstand zu einer dem Fluidströmungsraum zugewandten Innenseite der Umfangswandung des äußeren Gehäuses aufweist. Dieser Abstand ist vorzugsweise derart gewählt, dass er in allen Betriebszuständen vorhanden ist, also unabhängig von den thermischen Verhältnissen, wobei selbstverständlich bedingt durch sich ändernde thermische Verhältnisse auch die Größe des Abstands variieren kann.

Insbesondere dann, wenn dafür gesorgt ist, dass der Abstand kleiner ist als ein Abstand zwischen einem an der Außenseite der Umfangswandung des inneren Gehäuses gebildeten Erhöhungsmaximum und einem Einsenkungsminimum, kann die Wirkungsweise der erfindungsgemäßen Erhöhungs/Einsenkungs-Anordnung zum Vorgeben einer bestimmten Strömungsrichtung für die die Umfangswandung des inneren Gehäuses umströmenden Medien weiter verbessert werden.

Bei der erfindungsgemäßen Fahrzeugheizeinrichtung ist in dem von dem inneren Gehäuse umgebenen Raum ein in Richtung der Längsachse sich erstreckendes Flammrohr zu positionieren und die Umfangswandung des inneren Gehäuses weist im Bereich einer an der Innenseite derselben gebildeten Erhöhung zu einer Außenseite des Flammrohrs einen Abstand auf. Dabei ist zum Vorgeben einer definierten Strömungsrichtung der Abstand kleiner ist als ein Abstand zwischen einem an der Innenseite der Umfangswandung des inneren Gehäuses gebildeten Erhöhungsmaximum und einem Einsenkungsminimum.

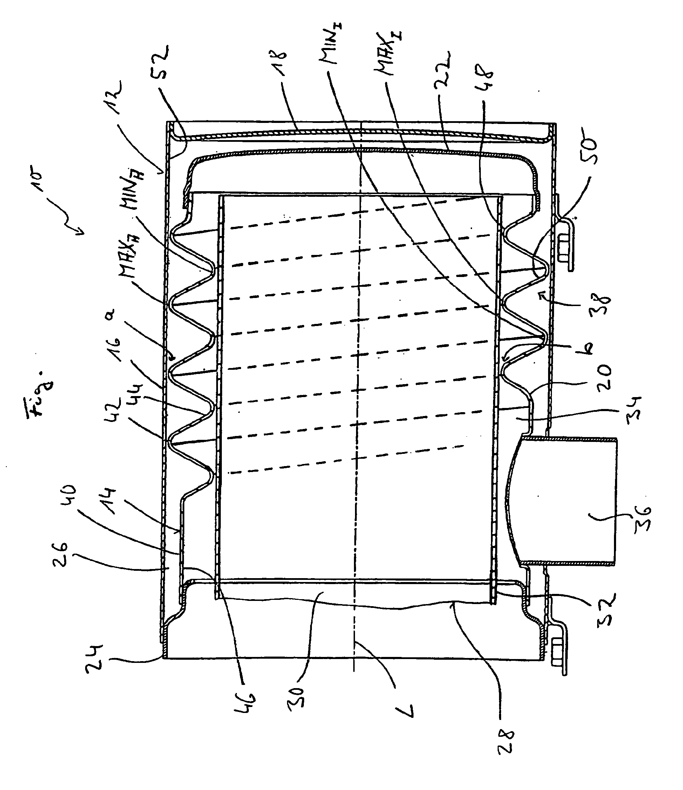

Nachfolgend wird die vorliegende Erfindung mit Bezug auf die beiliegende Zeichnung detailliert beschrieben, welche eine Längsschnittdarstellung einer erfindungsgemäßen Wärmetauscheranordnung zeigt.

Die in der Figur gezeigte Wärmetauscheranordnung 10 für ein Fahrzeugheizgerät umfasst zwei im Wesentlichen topfartig ausgebildete Gehäuse 12, 14. Das äußere Gehäuse 12 dieser beiden Gehäuse 12, 14 umfasst im dargestellten Ausgestaltungsbeispiel im Wesentlichen zylindrische und beispielsweise aus Blechmaterial gebildete Umfangswandung 16, welche an einem ihrer axialen Endbereiche - bezogen auf eine Gehäuselängsachse L - mit einem beispielsweise ebenfalls aus Blechmaterial geformten Boden 18 durch Verschweißung, Verlötung o. dgl. fest verbunden ist, so dass sich allgmein eine topfartige Struktur dieses äußeren Gehäuses ergibt. Auch das innere Gehäuse 14 umfasst eine beispielsweise aus einem Blechmaterial gebildete Umfangswandung 20, die ebenfalls in einem ihrer Endbereiche mit einem beispielsweise ebenfalls aus Blechmaterial aufgebauten Boden 22 durch Verschweißung, Verlötung o. dgl. fest verbunden ist. Auch für das innere Gehäuse 14 ergibt sich somit eine im Wesentlichen topfartige Struktur. An den von den Böden 18, 22 entfernten Endbereichen der Umfangswandungen 16, 20 sind diese an einem ringartigen Verbindungselement 24 festgelegt, so dass auch dort, ebenso wie im Bereich der Anbindung an die Böden 18, 22, ein fluiddichter Abschluss eines zwischen den beiden Gehäusen 12, 14 gebildeten Fluidströmungsraums 26 erlangt werden kann. Über nicht dargestellte Einlass- bzw. Auslassöffnungen, die nahe den Böden 18, 22 einerseits und dem Verbindungselement 24 andererseits positioniert sein können, kann zu erwärmendes Fluid, also beispielsweise Wasser o. dgl., in den Fluidströmungsraum 26 eingeleitet bzw. aus diesem nach Durchströmung desselben wieder abgezogen werden.

In dem von dem inneren Gehäuse 14 umgebenen Raumbereich erstreckt sich bei mit einem Heizgerät bzw. Heizbrenner verbundener Wärmetauscheranordnung 10 ein beispielsweise ebenfalls zylindrisches Flammrohr 28. In dem von diesem Flammrohr 28 umschlossenen Innenraum 30 strömen die Verbrennungsabgase in Richtung der Gehäuselängsachse L und in der Figur von links nach rechts auf den Boden 22 des inneren Gehäuses 14 zu. Beim Auftreffen auf diesen Boden 22 werden die Verbrennungsabgase nach radial außen umgelenkt und treten in einen zwischen der Umfangswandung 20 des inneren Gehäuses 14 und der Außenseite 32 des Flammrohrs 28 gebildeten Abgasströmungsraum 34 ein. Nach Durchströmen dieses Abgasströmungsraums 34 verlassen die Verbrennungsabgase die Wärmetauscheranordnung 10 über einen Abgasauslass 36 und werden beispielsweise zu einem Abgasnachbehandlungssystem geleitet.

Man erkennt in der Figur, dass die Umfangswandung 20 des inneren Gehäuses 14 nicht über ihren gesamten Längenbereich mit zylindrischer Formgebung ausgebildet ist, wie dies in den beiden Endbereichen zur besseren Verbindbarkeit mit dem Boden 22 bzw. dem Verbindungselement 24 der Fall ist. Vielmehr ist über ihren wesentlichen Längenbereich diese Umfangswandung 20 mit einer allgmein mit 38 bezeichneten Erhöhungs/Einsenkungs-Anordnung ausgebildet. Diese bei Betrachtung im Längsschnitt mit ondulierender Gestaltung ausgebildete Erhöhungs/Einsenkungs-Anordnung 38 bildet an der dem Fluidströmungsraum 26 zugewandten Außenseite 40 der Umfangswandung 20 Erhöhungen 42 und Einsenkungen 44 und bildet gleichermaßen an der dem Abgasströmungsraum 34 zugewandten Innenseite 46 der Umfangswandung 20 Erhöhungen 48 und Einsenkungen 50. Die Formgebung der Umfangswandung 20 ist weiterhin so, dass diese Erhöhungen 42, 48 bzw. Einsenkungen 44, 50 nicht in Umfangsrichtung ringartig ausgebildet sind, sondern sowohl an der Außenseite 40 als auch der Innenseite 46 der Umfangswandung 20 eine schraubenartige bzw. gewindeartige Struktur annehmen, so dass sowohl an der Außenseite als auch an der Innenseite davon gesprochen werden kann, dass eine schraubenartig sich erstreckende Erhöhung 42 bzw. 50 gebildet ist, ebenso wie eine zugeordnete und sich schraubenartig erstreckende Einsenkung 44 bzw. 50. Bei Aufbau der Umfangswandung 20 aus einem vergleichsweise dünnen Blechmaterial ergibt sich somit weiterhin eine Anordnung, bei der dort, wo an der Außenseite 40 eine Erhöhung bzw. die Erhöhung 42 gebildet ist, an der Innenseite 46 eine Einsenkung bzw. die Einsenkung 50 liegt, während dort, wo an der Außenseite 40 eine Einsenkung bzw. die Einsenkung 44 gebildet ist, an der Innenseite 46 eine Erhöhung bzw. die Erhöhung 48 gebildet ist. Eine derartige Strukturierung der Umfangswandung 20 kann beispielsweise dadurch erhalten werden, dass ein zunächst zylindrisch geformter Blechrohling auf einen mit einem Außengewinde versehenen Formkörper "aufgeschraubt" wird, wobei bei diesem Vorgang des Aufschraubens dann die gewindeartig ausgestaltete Erhöhungs/Einsenkungs-Anordnung 38 mit der schraubenartigen bzw. gewindeartigen Formgebung gebildet wird.

Man erkennt in der Figur weiter, dass die Außenseite 40 der Umfangswandung 20 auch dort, wo eine bzw. die Erhöhung 42 gebildet ist bzw. ihr Erhöhungsmaximum MAX_{A} aufweist, ein geringfügiger Abstand a zur Innenseite 52 der Umfangswandung 16 des äußeren Gehäuses 12 besteht. Dieser Abstand a ist im Vergleich zu einem Abstand, der in radialer Richtung zwischen dem Erhöhungsmaximum MAX_{A} und einem an der Außenseite 40 der Umfangswandung 20 gebildeten Einsenkungsminimum MIN_{A} gebildet ist, deutlich kleiner. Somit ergibt sich in demjenigen Bereich, in dem die Umfangswandung 20 des inneren Gehäuses 14 mit der gewindeartigen Formgebung ausgebildet ist, für den Fluidströmungsraum 26 eine entsprechend gewindeartige bzw. schraubenartige Formgebung, so dass das diesen Fluidströmungsraum 26 durchströmende und zu erwärmende Fluid entlang eines schraubenartigen Weges entsprechend der Formgebung der Umfangswandung 20 sich durch den Fluidströmungsraum 26 bewegen wird. Auf diese Art und Weise wird sichergestellt, dass die Wechselwirkungsstrecke zwischen dem zu erwärmenden Fluid und der durch die Verbrennungsabgase erwärmten Umfangswandung 20 verlängert wird. Gleichwohl stellt das Bereithalten des Abstands a sicher, dass unabhängig vom Betriebszustand, insbesondere auch unabhängig von den thermischen Bedingungen, ein direkter Kontakt zwischen der Umfangswandung 20 des inneren Gehäuses 14 und der Umfangswandung 16 des äußeren Gehäuses 12 in diesem Bereich nicht auftreten kann. Auf diese Art und Weise kann eine Abnutzung vermieden werden. Auch kann das Auftreten von Klappergeräuschen vermieden werden.

Gleichermaßen erkennt man in der Figur, dass die Außenseite 32 des Flammrohrs 28 zur Innenseite 46 der Umfangswandung 20 im Bereich der an der Innenseite 46 gebildeten Erhöhung 48 einen Abstand b aufweist. Auch dieser Abstand b ist so bemessen, dass er deutlich kleiner ist als der radiale Abstand zwischen einem Erhöhungsmaximum MAX₁ und einem Einsenkungsminimum MIN₁ an der Innenseite 46 der Umfangswandung 20. Somit ergibt sich wiederum, dass die entlang des Abgasströmungsraums 34 strömenden Verbrennungsabgase nicht geradlinig bzw. in axialer Richtung strömen, sondern eine Umfangsströmungskomponente mitgeteilt bekommen, so dass auch hier ein schraubenartiger Strömungsweg mit entsprechend verlängerter Wechselwirkungsstrecke bereitgestellt werden kann. Auch in diesem Falle stellt das Bereithalten des Abstands b sicher, dass ein direkter gegenseitiger Anlagekontakt mit den vorangehend bereits angesprochenen Nachteilen vermieden werden kann.

Die erfindungsgemäße Wärmetauscheranordnung ist insbesondere durch den Aufbau der Umfangswandung 20 des inneren Gehäuses 14 aus Blechmaterial in einfacher Art und Weise mit der Erhöhungs/Einsenkungs-Anordnung 38 herstellbar, die sowohl an der Außenseite 40 als auch an der Innenseite 46 dafür sorgt, dass die dort jeweils strömenden Medien einer bestimmten Strömungsrichtung, nämlich einer gewindeartigen bzw. schraubenartigen Strömungsrichtung folgen. Es sei darauf hingewiesen, dass selbstverständlich insbesondere im Bereich der Umfangswandung 20 Abweichungen von der konkret dargestellten Ausgestaltungsform vorhanden sein können. So muss diese nicht grundsätzlich aus einem zylindrischen Grundkörper gebildet sein, sondern kann beispielsweise bei Beibehalt der balgenartigen bzw. ondulierten Strukturierung sich verjüngend, beispielsweise in Richtung zum Boden 22 hin sich verjüngend ausgebildet sein. Weiterhin ist es selbstverständlich möglich, die Erhöhungs/Einsenkungs-Anordnung 38 aus mehreren in Umfangsrichtung bzw. in Achsrichtung voneinander getrennten, diskreten Bereichen aufzubauen, so dass beispielsweise auch in Zwischenbereichen des Fluidströmungsraums 34 Abschnitte vorhanden sind, in welchen die Umfangswandung 20 eine beispielsweise zylindrische, im Wesentlichen aber nicht ondulierte Strukturierung aufweist.

## Patentansprüche

1. Fahrzeugheizeinrichtung, umfassend einen Heizbrenner und eine damit verbundene Wärmetauscheranordnung (10), diese umfassend:
- ein topfartiges äußeres Gehäuse (12) mit einer in Richtung einer Gehäuselängsachse (L) sich erstreckenden Umfangswandung (16) und einer Bodenwandung (18),
- ein topfartiges inneres Gehäuse (14) mit einer in Richtung der Gehäuselängsachse (L) sich erstreckenden Umfangswandung (20) und einer Bodenwandung (22), wobei zwischen dem inneren Gehäuse (14) und dem äußeren Gehäuse (12) ein Strömungsraum (26) für zu erwärmendes Fluid gebildet ist, wobei in dem von dem inneren Gehäuse (14) umgebenen Raum ein in Richtung der Längsachse (L) sich erstreckendes Flammrohr (28) positioniert ist,
**dadurch gekennzeichnet, dass** das innere Gehäuse (14) im Bereich seiner Umfangswandung (20) derart ausgebildet ist, dass an der dem Fluidströmungsraum (26) zugewandten Außenseite (40) der Umfangswandung (20) und an der vom Fluidströmungsraum (26) abgewandten und einem Verbrennungsabgasströmungsraum (34) zugewandt zu positionierenden Innenseite (46) der Umfangswandung (20) eine bezüglich der Längsachse (L) schraubenartig verlaufende Erhöhungs/Einsenkungs-Anordnung (38) gebildet ist, dass die Umfangswandung (20) des inneren Gehäuses (14) im Bereich einer an der Innenseite (46) derselben gebildeten Erhöhung (48) zu einer Außenseite (32) des Flammrohrs (28) einen Abstand (b) aufweist und dass der Abstand (b) kleiner ist als ein Abstand zwischen einem an der Innenseite (46) der Umfangswandung (20) des inneren Gehäuses (14) gebildeten Erhöhungsmaximum (MAX_{I}) und einem Einsenkungsminimum (MIN_{I}).

2. Fahrzeugheizeinrichtung nach Anspruch 1,
**dadurch gekennzeichnet, dass** das innere Gehäuse (14) im Bereich seiner Umfangswandung (20) zum Bereitstellen der Erhöhungs/Einsenkungs-Anordnung (38) balgenartig ausgebildet ist.

3. Fahrzeugheizeinrichtung nach einem der Ansprüche 1 oder 2,
**dadurch gekennzeichnet, dass** dort, wo an der Außenseite (40) der Umfangswandung (20) des inneren Gehäuses (14) eine Erhöhung (42) gebildet ist, an der Innenseite (46) eine Einsenkung (50) gebildet ist und umgekehrt.

4. Fahrzeugheizeinrichtung nach einem der Ansprüche 1 bis 3,
**dadurch gekennzeichnet, dass** die Umfangswandung (20) des inneren Gehäuses (14) durch Umformen eines Blechrohlings gebildet ist.

5. Fahrzeugheizeinrichtung nach einem der Ansprüche 1 bis 4,
**dadurch gekennzeichnet, dass** die Umfangswandung (20) des inneren Gehäuses (14) im Bereich einer an der Außenseite (40) derselben gebildeten Erhöhung (42) einen Abstand (a) zu einer dem Fluidströmungsraum (26) zugewandten Innenseite (52) der Umfangswandung (16) des äußeren Gehäuses (12) aufweist.

6. Fahrzeugheizeinrichtung nach Anspruch 5,
**dadurch gekennzeichnet, dass** der Abstand (a) kleiner ist als ein Abstand zwischen einem an der Außenseite (40) der Umfangswandung (20) des inneren Gehäuses (14) gebildeten Erhöhungsmaximum (MAX_{A}) und einem Einsenkungsminimum (MIN_{A}).

## Claims

1. Vehicle heating device comprising a burner and an associated heat exchanger arrangement (10), the latter comprising:
- a pot-like outer housing (12) with a circumferential wall (16) extending in the direction of a housing longitudinal axis (L) and a bottom wall (18),
- a pot-like inner housing (14) with a circumferential wall (20) extending in the direction of a housing longitudinal axis (L) and a bottom wall (22), a flow space (26) for fluid to be heated being formed between the inner housing (14) and the outer housing (12), a flame tube (28) extending in the direction of the longitudinal axis (L) being positioned inside the space enclosed by the inner housing (14),
**characterized by** the inner housing (14) being designed in the section of the circumferential wall (20) such that an elevation/depression arrangement (38) extending helicoidally in relation to the longitudinal axis (L) is formed at the outside (40) of the circumferential wall (20) facing the fluid flow space (26) and at the inner side (46) of the circumferential wall (20) to be positioned facing away from the fluid flow space (26) and facing a combustion exhaust gas flow space (34), by the circumferential wall (20) of the inner housing (14) providing in the area of an elevation (48) formed at the inner side (46) of the latter, a distance (b) to an outer side (32) of the flame tube (28) and by the distance (b) being smaller than a distance between an elevation maximum (MAX_{I}) formed at the inner side (46) of the circumferential wall (20) of the inner housing (14) and a depression minimum (MIN_{I}).

2. Vehicle heating device according to claim 1,
**characterized by** the inner housing (14) being formed bellow-like in the region of its circumferential wall (20) for providing the elevation/depression arrangement (38).

3. Vehicle heating device according to claim 1 or 2,
**characterized in that** where at the outer side (40) of the circumferential wall (20) of the inner housing (14) an elevation (42) is formed, a depression (50) is formed at the inner side (46) and vice versa.

4. Vehicle heating device according to one of claims 1 to 3,
**characterized by** the circumferential wall (20) of the inner housing (14) being formed by transforming a sheet-metal blank.

5. Vehicle heating device according to one of claims 1 to 4,
**characterized by** the circumferential wall (20) of the inner housing (14) providing in the area of an elevation (42) formed at the outer side (40) of the latter, a distance (a) to an inner side (52) of the circumferential wall (16) of the outer housing (12).

6. Vehicle heating device according to claim 5,
**characterized by** the distance (a) being smaller than a distance between an elevation maximum (MAX_{A}) being formed at the outer side (40) of the circumferential wall (20) of the inner housing (14) and a depression minimum (MIN_{A}).

## Revendications

1. Dispositif de chauffage pour un véhicule, comprenant un brûleur et un arrangement d'échangeur de chaleur (10) associé, ce dernier comprenant:
- un boîtier extérieur de type pot (12) avec un paroi circonférentiel (16) s'étendant dans la direction d'un axe longitudinal du boîtier (L) et un paroi de fond (18),
- un boîtier intérieur de type pot (14) avec un paroi circonférentiel (20), s'étendant dans la direction de l'axe longitudinal du boîtier (L) et un paroi de fond (22); un espace d'écoulement (26) pour du fluide à chauffer étant formé entre le boîtier intérieur (14) et le boîtier extérieur (12), un tube de flamme (28) s'étendant dans la direction de l'axe longitudinal du boîtier (L) étant positionné dans l'espace entouré par le boîtier intérieur (14),
**caractérisé par** le boîtier intérieur (14) étant, dans la zone de son paroi circonférentiel (20), arrangé de telle manière qu'un arrangement de surélévation/ de dépression (38) s'étendant en forme d'hélice relatif à l'axe longitudinal (L) soit formé au côté extérieur (40) tourné vers l'espace d'écoulement (26) et au côté intérieur (46) du paroi circonférentiel (20) à positionner tourné vers un espace d'écoulement de gaz d'échappement de combustion, et par le paroi circonférentiel (20) du boîtier intérieur (14) présentant dans la zone d'une surélévation (48) formée au côté intérieur de ce dernier une distance (b) par rapport à un côté extérieur (32) du tube de flamme (28) et par la distance (b) étant plus petite qu'une distance entre un maximum de surélévation (MAX_{I}) formé au côté intérieur (46) du paroi circonférentiel (20) du boîtier intérieur (14) et un minimum de dépression (MIN_{I}).

2. Dispositif de chauffage pour un véhicule selon la revendication 1,
**caractérisé par** le boîtier intérieur (14) étant agencé sous forme de soufflet dans la zone de son paroi circonférentiel (20) pour présenter l'arrangement de surélévation/de dépression (38).

3. Dispositif de chauffage pour un véhicule selon la revendication 1 ou 2,
**caractérisé en ce que** là où une surélévation (42) est formée au côté extérieur (40) du paroi (20) du boîtier intérieur (14) une dépression (50) est formée au côté intérieur (46) et vice versa.

4. Dispositif de chauffage pour un véhicule selon une des revendications 1 à 3,
**caractérisé par** le paroi circonférentiel (20) du boîtier intérieur (14) étant formé en transformant une ébauche de tôle.

5. Dispositif de chauffage pour un véhicule selon une des revendications 1 à 4,
**caractérisé par** le paroi circonférentiel (20) du boîtier intérieur (14) présentant dans la zone d'une surélévation (42) formée au côté extérieur de ce dernier une distance (a) par rapport à un côté intérieur (52) du paroi circonférentiel (16) du boîtier extérieur tourné vers l'espace d'écoulement (26).

6. Dispositif de chauffage pour un véhicule selon la revendication 5,
**caractérisé par** la distance (a) étant inférieure à une distance entre un maximum de surélévation (MAX_{A}) formé au côté extérieur (40) du paroi circonférentiel (20) du boîtier intérieur (14) et un minimum de dépression (MIN_{A}).
